# EUROPÄISCHE PATENTSCHRIFT

(11) **EP 0 856 090 B1**
(45) Veröffentlichungstag und Bekanntmachung des Hinweises auf die Patenterteilung: **26.05.1999**
(21) Anmeldenummer: 96934679.0
(22) Anmeldetag: 14.10.1996
(51) Int. Cl.: E04G 21/18, G01C 15/02

(54) **MARKIERUNGSELEMENT ZUR MARKIERUNG DES METERRISSES IN BAUWERKEN**
MARKER ELEMENT FOR MARKING THE LEVEL IN BUILDINGS
ELEMENT SERVANT AU MARQUAGE D'UNE LIGNE DE REFERENCE A UNE HAUTEUR D'UN METRE DANS DES CONSTRUCTIONS

(30) Priorität: 17.10.1995 DE 19538655; 05.07.1996 DE 19627188
(43) Veröffentlichungstag der Anmeldung: 05.08.1998
(73) Patentinhaber: Rothbucher, Georg, 83457 Bayerisch Gmain (DE)
(72) Erfinder: Rothbucher, Georg, 83457 Bayerisch Gmain (DE)
(74) Vertreter: Schaumburg, Thoenes, Thurn Patentanwälte
(86) Internationale Anmeldenummer: EP9604466
(87) Internationale Veröffentlichungsnummer: WO9714859

(56) Entgegenhaltungen:
- CH-A- 456 176
- CH-A- 535 422
- DE-A- 2 710 397
- US-A- 5 062 753

## Beschreibung

Die Erfindung betrifft ein Markierungselement zur Markierung des Meterrisses in Bauwerken mit einer Platte, die auf einer ihrer Seiten eine Marke trägt und mindestens ein Langloch hat.

Bei Erstellung des Rohbaues wird in den Räumen eines Bauwerkes der sogenannte Meterriß angebracht. Dieser stellt eine Markierung dar, die üblicherweise exakt einen Meter über dem zukünftigen Estrich liegen soll. Dieser Meterriß bildet den Referenzpunkt für alle weiteren Ausbaumaßnahmen wie die Verlegung des Bodens, das Setzen der Türstöcke und dergleichen. Üblicherweise wird bisher der Meterriß mit Bleistift auf die Rohbauwand gezeichnet. Häufig wird dieser Meterriß verwischt oder sonst unbrauchbar gemacht. Ferner ist der Meterriß nach dem Verputzen der Wand nicht mehr sichtbar, so daß später nicht mehr kontrolliert werden kann, weshalb bestimmte Maße nicht eingehalten wurden oder nicht einzuhalten sind.

Aus der CH-A-456 176 ist ein Markierungselement der eingangs genannten Art bekannt, das an einem Schieber befestigt ist, der seinerseits in einer zum horizontalen Befestigen in einer Wand bestimmten Verankerungshülse längsverschieblich geführt ist, so daß die Markierungsplatte in einem Abstand von der Wand fixiert werden kann.

Der Erfindung liegt die Aufgabe zugrunde, ein einfach herzustellendes und zu handhabendes Markierungselement anzugeben.

Diese Aufgabe wird durch die im Anspruch 1 angegebenen Markmale gelöst.

Mit Hilfe der Langlöcher kann die Platte an einer Wand zunächst grob angeschraubt, dann genau ausgerichtet und schließlich in der exakten Position festgeschraubt werden. Somit kann das Markierungselement in der Höhe bequem so eingestellt werden, bis die Linie exakt die gewünschte Höhe über dem Boden hat. Das Markierungselement kann nicht mehr verloren gehen. Da es mit einer dauerhaften Marke versehen ist, kann die Marke auch nicht mehr verwischt werden. Die Platte kann beim Verputzen der Wand weitgehend miteingeputzt werden, wobei lediglich die Marke noch freigelassen wird. Somit kann die Marke für Kontrollzwecke sichtbar sein, bis die Bauabnahme erfolgt ist. Somit können zum einen Maßabweichungen vermieden werden und es kann zumindest nachträglich festgestellt werden, wer für eventuelle Maßabweichungen verantwortlich ist.

Die Marke kann beispielsweise von einer geradlinigen Rippe auf der Plattenoberfläche gebildet sein. Damit wird die Möglichkeit ausgeschlossen, daß eine nur aufgemalte Linie abgekratzt oder verwischt wird.

In die Aussparung kann ein Nagel gesteckt werden. Dies hat den Vorteil, daß zum einen mit Hilfe dieses Nagels die Platte vorläufig an der gewünschten Stelle fixiert werden kann, bevor sie endgültig mit den die Langlöcher durchsetzenden Schrauben festgelegt wird. Zum anderen kann die Platte praktisch vollständig eingeputzt werden, wobei nur noch der Nagel aus dem Putz heraussteht. Der Nagel markiert den Meterriß. Nach der Bauabnahme wird der Nagel herausgezogen und das kleine Löchlein verschlossen, wozu im allgemeinen bereits die Wandfarbe ausreicht.

Die Marke kann auch von einem senkrecht von der Platte abstehenden Stift gebildet sein. Dieser Stift sollte so lang sein, daß er der Stärke der Putzschicht entspricht und auch nach dem Einputzen der Platte noch sichtbar ist. Damit braucht man keinen Nagel oder einen entsprechenden Zusatzstift für die Markierung. Da die Putzschicht jedoch unterschiedlich dick sein kann, kann es auch zweckmäßig sein, wenn der Stift eine axiale Bohrung hat, in welche wiederum ein Nagel gesteckt werden kann, so daß auch bei dickeren Putzschichten die Lage des Stiftes sichtbar gemacht werden kann.

Vorzugsweise hat die Platte mindestens ein weiteres Loch, mit dessen Hilfe die Platte nachdem vorläufigen Fixieren mittels der Langlöcher endgültig unverückbar an der Wand befestigt werden kann.

Ein Markierungselement der erfindungsgemäßen Art kann auf einfache Weise aus Kunststoff hergestellt werden. Um die Putzhaftung auf derartigen Kunststoffteilen zu verbessern, kann es zweckmäßig sein, wenn die Platte eine die Putzhaftung begünstigende Oberflächenstruktur hat.

Als alternative Lösung zu der oben beschriebenen Platte, die einen die Putzschicht durchdringenden Stift als Markierung hat, wird vorgeschlagen, daß an der Platte des Markierungselementes nahe der Marke mindestens ein senkrecht von der Platte abstehendes elastisch biegsames nadelförmiges Element angeordnet ist. Gegenüber der oben beschriebenen Lösung hat diese Lösung den Vorteil, daß über die Platte hinweg der Putz aufgetragen werden kann, ohne daß der Stift das Einputzen behindert. Das elastisch biegsame nadelförmige Element legt sich beim Einputzen flach und behindert somit das Auftragen des Putzes nicht. Solange der Putz noch feucht und nachgiebig ist, richtet sich das elastische biegsame Element wieder auf und ragt dann aus der Putzschicht heraus, so daß es die Lage der Markierung anzeigen kann. Zweckmäßigerweise sind drei derartige Elemente im Kreis um die Marke herum angeordnet.

Wenn die Platte aus einem harten Kunststoff hergestellt wird, muß das nadelförmige Element aus einem von dem Material der Platte verschiedenen Material bestehen, um die nötige Flexibilität zu gewährleisten.

Zweckmäßigerweise ist die Platte so ausgebildet, daß neben der Markierung, dem Langloch und den Befestigungslöchern noch ein Beschriftungsfeld verbleibt, auf dem der Benutzer Maßangaben notieren kann.

Wenn die Markierung von einem Loch gebildet ist oder in der Markierung beispielsweise zum Einstecken eines Nagels eine Aussparung ausgebildet ist, ist es zweckmäßig, wenn nach der Herstellung der Platte das Loch bzw. die Aussparung von einer dünnen Kunststoffhaut überdeckt sind, so daß diese Öffnungen beim Einputzen der Platte nicht zugeschmiert werden. Die Löcher können aber dann ohne weiteres bei Gebrauch durchstoßen werden, um beispielsweise einen Nagel in das Markierungsloch bzw. die Aussparung in der Marke einzustecken.

Die folgende Beschreibung erläutert die Erfindung in Verbindung mit den beigefügten Zeichnungen anhand von Ausführungsbeispielen. Es zeigen:
- Figur 1: eine teilweise schematische perspektivische Darstellung einer Ausführungsform des erfindungsgemäßen Markierungselementes,
- Figuren 2 bis 4: jeweils einen Schnitt entlang der Linie I-I in Figur 1 durch Ausführungsvarianten des in Figur 1 dargestellten Markierungselementes,
- Figur 5: eine Draufsicht auf eine zweite Ausführungsform eines erfindungsgemäßen Markierungselementes,
- Figur 6: eine Seitenansicht des in Figur 5 dargestellten Markierungselementes.

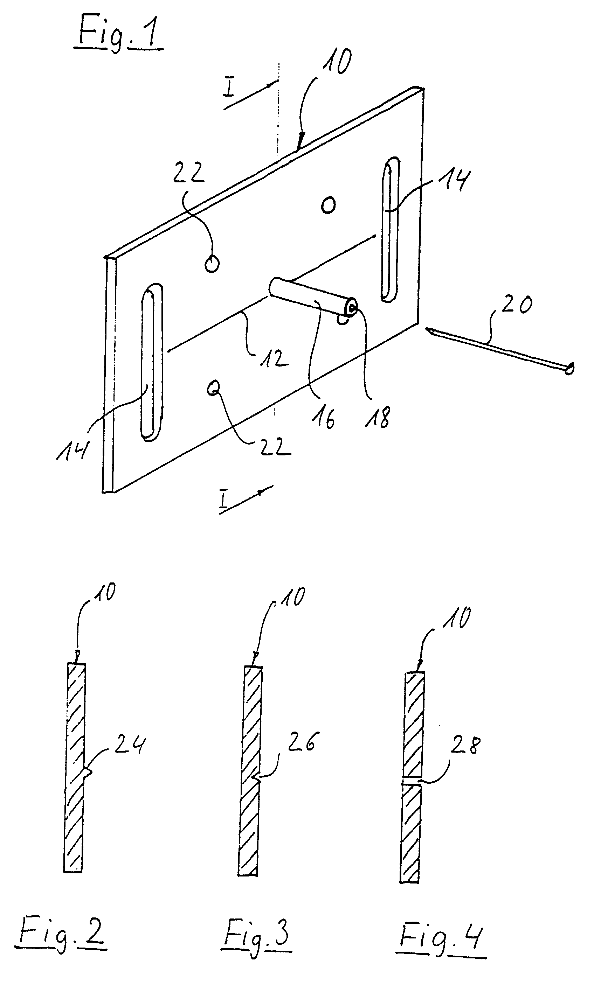

Das in Figur 1 dargestellte Markierungselement umfaßt eine rechteckige Kunststoffplatte 10 von jeweils einigen Zentimetern Kantenlänge. Auf der dem Betrachter zugewandten Oberseite der Platte 10 ist parallel zu deren Längskanten und in der Mitte zwischen diesen eine gerade Markierungslinie 12 aufgebracht. Nahe den Enden der Markierungslinie 12 sind in der Platte 10 zwei Langlöcher 14 ausgebildet, die mit ihrer Längsrichtung parallel zu den kurzen Rechteckseiten der Platte 10 und damit senkrecht zur Markierungslinie gerichtet sind. In der Längsmitte der Markierungslinie 12 ist auf dieser ein senkrecht zur Plattenebene gerichteter Stift 16 angeordnet, der einstückig mit der Platte 10 ausgebildet sein kann. Der Stift 16 hat eine axiale Bohrung oder Aussparung 18, in die ein Nagel 20 eingeführt werden kann.

Oberhalb und unterhalb der Markierungslinie 12 hat die Platte 10 ferner Befestigungslöcher 22. Das Anbringen des so weit beschriebenen Markierungselementes an der Rohbauwand erfolgt in der Weise, daß die Platte 10 zunächst grob an dem vorgesehenen Platz mit Hilfe von die Langlöcher 14 durchsetzenden Schrauben oder sonstigen Befestigungsmitteln so befestigt wird, daß die Platte noch auf der Wand verschiebbar ist. Dann wird die Platte so verschoben, daß die Markierungslinie 12 exakt auf der vorgeschriebenen Höhe liegt. In dieser Stellung wird dann die Platte endgültig fixiert, indem entweder die die Langlöcher durchsetzenden Schrauben festgezogen oder aber Nägel durch die Fixierlöcher 22 geschlagen werden. Letztere Befestigungsmethode hat den Vorzug, daß die Platte unverückbar an der Wand befestigt ist. Die Markierungslinie 12 und der Stift 16 bzw. der in ihn eingesetzte Nagel 20 stellen nun den Meterriß dar und können als Referenzpunkt für alle Vermessungsmaßnahmen verwendet werden, wobei der Stift 16 und zumindest der Nagel 20 auch nach dem Verputzen der Wände noch sichtbar sind. Ist dann der Bau abgenommen und klargestellt, daß alle Maße in Ordnung sind, kann der Nagel 20 aus der Bohrung 18 herausgezogen und das verbliebene kleine Loch mühelos verschlossen werden.

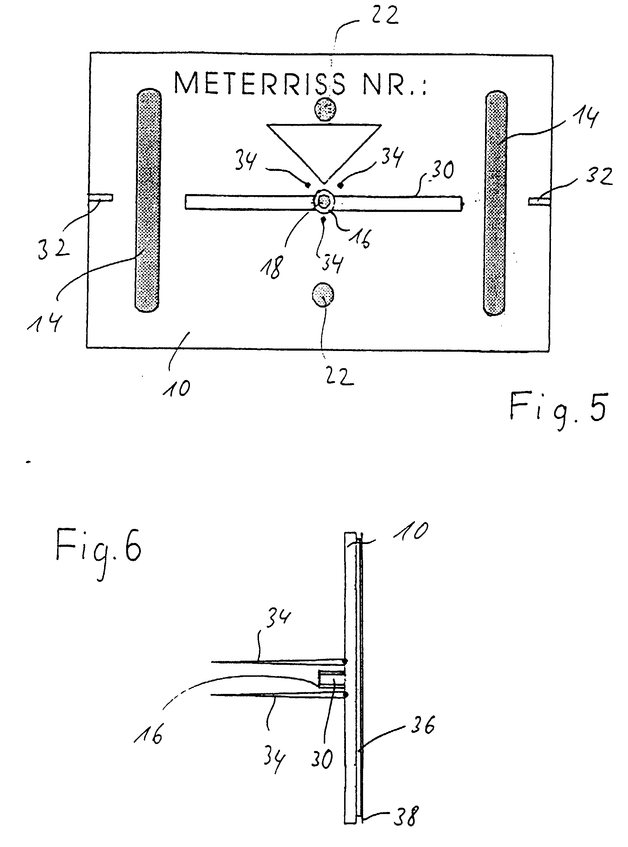

Die Figuren 2 und 3 zeigen im Querschnitt eine Platte 10, auf der die Markierungslinie 12 plastisch ausgebildet ist. In Figur 2 wird die Markierungslinie von einer Rippe 24 gebildet, während in Figur 3 die Markierungslinie durch eine Nut 26 dargestellt ist. Eine besonders einfache Lösung ist in Figur 4 wiedergegeben, bei welcher anstelle der Markierungslinie und/oder des Stiftes 16 lediglich eine Bohrung 28 vorgesehen ist, durch die ein Nagel geschlagen wird, wenn die Platte auf die richtige Höhe eingestellt ist. Der Nagel übernimmt dann sowohl die Aufgabe, die Platte in der vorgeschriebenen Höhe zu fixieren als auch die Aufgabe der Markierungspunktes vor und nach dem Einputzen der Platte 10.

Das erfindungsgemäße Markierungselement stellt ein einfaches Mittel dar, den Meterriß auch unter den rauhen Bedingungen einer Baustelle zweifelsfrei festzulegen und sichtbar zu halten, bis die Bauabnahme erfolgen kann.

Bei der in den Figuren 5 und 6 dargestellten Ausführungsform des erfindungsgemäßen Markierungselementes sind gleiche Teile wiederum mit gleichen Bezugszeichen versehen. Die Ausführungsform gemäß Figur 5 unterscheidet sich von der vorher beschriebenen Ausführungsform im wesentlichen dadurch, daß anstelle von 4 Fixierlöchern nur 2 mittig zwischen den Langlöchern 14 angeordnete Fixierlöcher 22 vorgesehen sind. Ferner ist anstelle der Markierungslinie 12 eine Markierungsrippe 30 vorgesehen, die sich zwischen den Langlöchern 14 erstreckt und jenseits derselben durch Rippenabschnitte 32 fortgesetzt wird. Der Stift 16 mit seiner axialen Aussparung 18 ist in die Rippe 30 integriert, die im Querschnitt 3 rechteckförmig ausgebildet sein kann, wie dies in Figur 6 zu erkennen ist.

Die Höhe der Markierungsrippe 30 und des Stiftes 16 ist bei der zweiten Ausführungsform geringer als die übliche Dicke der Putzschicht. Die Platte würde daher nach ihrer Befestigung an der Wand vollständig eingeputzt werden. Um die Platte dennoch unter dem Putz wieder finden zu können, sind an der Platte 10 drei elastisch biegsame Kunststoffnadeln 34 mit gleichen Winkelabständen um den Stift 16 herum angeordnet. Die Nadeln 34 bestehen im Gegensatz zu der Platte 10 aus einem elastisch biegsamen Kunststoffmaterial und können entweder beim Spritzen der Platte 10 oder auch nach dem Herstellen derselben mit dieser verbunden werden. Beim Einputzen der an der Wand befestigten Platte 10 legen sich die Nadeln 34 um, so daß sie das Auftragen der Putzschicht nicht behindert. Aufgrund ihrer Elastizität richten sie sich anschließend wieder auf, so daß sie aus der Putzschicht herausragen und das Auffinden des Stiftes 16 und der Bohrung 18 ermöglichen. Die Bohrung 18 kann dabei zunächst durch eine dünne Haut noch verschlossen sein, so daß sich kein Putz in die Bohrung 18 einsetzt. Nach dem Auftragen der Putzschicht kann dann diese Haut durchstochen und beispielsweise ein Nagel in die Bohrung 18 eingesteckt werden. Die Nadeln 34 werden einfach abgeschnitten.

Unterhalb der Markierungsrippe 30 ist ein freies Feld, das für eine Beschriftung genutzt werden kann. Auf der Rückseite der Platte 10 ist eine Klebstoffschicht 36 angeordnet, die zunächst durch eine Folie 38 geschützt ist, die vor dem Aufkleben der Platte 10 an einer Mauer abgezogen wird.

## Patentansprüche

1. Markierungselement zur Markierung des Meterrisses in Bauwerken mit einer Platte (10), die auf einer ihrer Seiten eine Marke (12, 16; 24, 26, 28) trägt und mindestens ein Langloch hat, dadurch **gekennzeichnet,** daß die Marke von einem senkrecht von der Platte (10) abstehenden Vorsprung (16) gebildet ist, der eine senkrecht zur Plattenebene gerichtete Aussparung (18) hat.

2. Markierungselement nach Anspruch 1, dadurch **gekennzeichnet,** daß die Marke von einer geradlinigen Rippe (24) auf der Plattenoberfläche gebildet ist.

3. Markierungselement nach Anspruch 1, dadurch **gekennzeichnet,** daß der Vorsprung ein Stift (16) ist.

4. Markierungselement nach einem der Ansprüche 1 bis 3, dadurch **gekennzeichnet,** daß die Platte (10) mindestens ein Fixierloch (22) hat.

5. Markierungselement nach einem der Ansprüche 1 bis 4, dadurch **gekennzeichnet,** daß die Platte (10) eine die Putzhaftung begünstigende Oberflächenstruktur hat.

6. Markierungselement nach einem der Ansprüche 1 bis 5, dadurch **gekennzeichnet,** daß es aus Kunststoff einstückig hergestellt ist.

7. Markierungselement nach einem der Ansprüche 1 bis 6, dadurch **gekennzeichnet,** daß an der Platte (10) nahe der Marke (16) mindestens ein senkrecht von der Platte (10) abstehendes nadelförmiges, elastisch biegsames Element (34) angeordnet ist.

8. Markierungselement nach Anspruch 7, dadurch **gekennzeichnet,** daß das nadelförmige Element (34) aus einem von dem Material der Platte (10) verschiedenen Material hergestellt ist.

9. Markierungselement nach einem der Ansprüche 1 bis 8, dadurch **gekennzeichnet,** daß die Platte (10) ein Beschriftungsfeld trägt.

10. Markierungselement nach den Ansprüchen 1 und 6, dadurch **gekennzeichnet,** daß die in der Markierung (16) ausgebildete Aussparung (18) nach Herstellung des Markierungselementes von einer dünnen Kunststoffhaut überdeckt ist.

11. Markierungselement nach einem der Ansprüche 1 bis 10, dadurch **gekennzeichnet,** daß die Platte (10) auf ihrer Rückseite eine durch eine abziehbare Folie (38) geschützte Klebstoffschicht (36) trägt.

## Claims

1. A marker element for marking the meter line in buildings, with a plate (10), which on one of its sides carries a mark (12, 16; 24, 26, 28) and which has at least one elongated hole, characterized in that the mark is formed by an upstanding projection (16) perpendicular to the plate (10), which projection has an opening (18) arranged perpendicular to the plane of the plate.

2. A marker element according to claim 1, further characterized in that the mark is formed by a straight rib (24) on the surface of the plate.

3. A marker element according to claim 1, further characterized in that the projection is a stud (16).

4. A marker element according to any one of claims 1 to 3, characterized in that the plate (10) has at least one fixing opening (22).

5. A marker element according to any one of claims 1 to 4, characterized in that the plate (10) has an outer surface structure favorably aderherable to plaster.

6. A marker element according to any one of claims 1 to 5, further characterized in that the marking element is made as one piece out of plastic.

7. A marker element according to any one of claims 1 to 6, characterized in that on the plate (10) near the mark (16) at least one elastically bendable needle-shaped element (34) is arranged perpendicular to the plate (10).

8. A marker element according to claim 7, further characterized in that the needle-shaped element (34) is made from a material different from the material of the plate (10).

9. A marker element according to any one of claims 1 to 8, further characterized in that the plate (10) carries an inscription field.

10. A marker element according to any one of claims 1 to 8, further characterized in that in the making of the marker element the opening (18) is covered with a thin plastic skin.

11. A marker element according to any one of claims 1 to 10, further characterized in that the plate (10) on its rear side carries a layer of adhesive (36) protected by a removable foil (38).

## Revendications

1. Elément de marquage pour marquer une ligne de référence à une hauteur d'un mètre dans des constructions, constitué par une plaque (10) qui comporte sur une de ses faces un repère (12, 16; 24, 26, 28) et qui possède au moins un trou oblong, caractérisé en ce que le repère est constitué par une partie en saillie s'étendant perpendiculairement à la plaque (10), laquelle partie en saillie possède un évidement (18) dirigé perpendiculairement au plan de la plaque.

2. Elément de marquage selon la revendication 1, caractérisé en ce que le repère est constitué par une nervure rectiligne (24) réalisée sur la surface extérieure de la plaque.

3. Elément de marquage selon la revendication 1, caractérisé en ce que la partie en saillie est une tige (16).

4. Elément de marquage selon l'une quelconque des revendications 1 à 3, caractérisé en ce que la plaque (10) comporte au moins un trou de fixation (22).

5. Elément de marquage selon l'une quelconque des revendications 1 à 4, caractérisé en ce que la plaque (10) comporte une structure de surface extérieure favorisant l'adhérence à l'enduit.

6. Elément de marquage selon l'une quelconque des revendications 1 à 5, caractérisé en ce qu'il est fabriqué d'un seul bloc en matière plastique.

7. Elément de marquage selon l'une quelconque des revendications 1 à 6, caractérisé en ce qu'au moins un élément élastique souple (34) en forme d'aiguille et s'étendant perpendiculairement à la plaque (10) est agencé sur la plaque (10) à proximité du repère (16).

8. Elément de marquage selon la revendication 7, caractérisé en ce que l'élément (34) en forme d'aiguille est fabriqué en une matière différente de la matière de la plaque (10).

9. Elément de marquage selon l'une quelconque des revendications 1 à 8, caractérisé en ce que la plaque (10) supporte une zone d'inscription.

10. Elément de marquage selon les revendications 1 et 6, caractérisé en ce que l'évidement (18) ménagé dans le repère (16) est recouvert d'une mince peau de matière plastique après la fabrication de l'élément de marquage.

11. Elément de marquage selon l'une quelconque des revendications 1 à 10, caractérisé en ce que la plaque (10) comporte au dos une couche de matière adhésive (36) protégée par une feuille pelable (38).
